# EUROPÄISCHE PATENTSCHRIFT

(11) **EP 1 404 153 B1**
(45) Veröffentlichungstag und Bekanntmachung des Hinweises auf die Patenterteilung: **17.01.2007**
(21) Anmeldenummer: 03019806.3
(22) Anmeldetag: 30.08.2003
(51) Int. Cl.: H05B 3/86

(54) **Beheizbare Fensterscheibe**
Electrically heatable windshield
Vitrage chauffant électrique

(30) Priorität: 27.09.2002 DE 10245250
(43) Veröffentlichungstag der Anmeldung: 31.03.2004
(73) Patentinhaber: DaimlerChrysler AG, 70567 Stuttgart (DE)
(72) Erfinder: Faix, Heinz, 75391 Gechingen (DE)

(56) Entgegenhaltungen:
- EP-A- 0 726 232
- GB-A- 737 371
- GB-A- 2 186 769
- US-A- 3 851 581
- US-A- 5 012 255

## Beschreibung

Die Erfindung betrifft eine beheizbare Fensterscheibe mit den Merkmalen des Oberbegriffs des Anspruches 1.

Eine derartige Fensterscheibe ist aus DE 38 28 526 A1 bekannt. DE 39 12 512 A1 ist eine weitere Fensterscheibe, nämlich eine trapezförmige Autoglasscheibe entnehmbar. Die transparente und elektrisch leitende Heizschicht ist an zwei Stromzuführungsleiter angeschlossen. Die Stromzuführungsleiter bilden zwei Elektroden für den Heizstrom und sind im Bereich der Scheibenoberkante und der Scheibenunterkante angeordnet. Der trapezförmige Zuschnitt der Scheibe bewirkt im oberen Scheibenbereich im Verhältnis zum unteren Scheibenbereich eine höhere Stromdichte und damit auch eine höhere Heizwirkung. Dadurch könnte die Heizschicht infolge lokalen Durchbrennens beschädigt werden. Aussparungen für den Fuß eines Fahrzeug-Innenrückspiegels oder für die Anordnung von Sensoren verstärken diesen Nachteil.

Aus GB 737 371 A und aus GB-A-2 186 769 sind jeweils Fensterscheiben für Kraftfahrzeuge bekannt, welche ebenfalls mit einer elektrisch leitenden Heizschicht versehen sind, welche an zwei Elektroden für den Heizstrom angeschlossen sind. Um eine ungleichmäßige Heizwirkung in verschiedenen Segmenten der Heizschicht zu reduzieren, enthält die Heizschicht elektrisch nichtleitende Aussparungen, z. B. in Form von Schlitzen oder Kreisen.

Der Erfindung liegt die Aufgabe zugrunde, überhöhte Stromdichten an einer elektrisch beheizbaren Fensterscheibe zu vermeiden.

Diese Aufgabe wird durch die Merkmalskombination des Anspruches 1 gelöst.

Gemäß Anspruch 1 wird eine gleichmäßigere Stromdichte in den verschiedenen Flächensegmenten der Heizschicht erzielt bzw. werden überhöhte Unterschiede in lokalen Stromdichten vermieden, indem innerhalb der Heizschicht mindestens ein Schlitz vorgesehen ist. Beschädigungen der Heizschicht wegen etwaiger lokal überhöhter Stromdichten können somit auf technisch einfache Weise vermieden werden.

Dabei ist der mindestens eine Schlitz mit Abstand zu den Elektroden, mit Abstand zu den Scheibenrändern der Fensterscheibe und mit Abstand zu einem einer Antenne oder einem Sensor zugeordneten, elektrisch nichtleitenden Flächensegment zugeordnet.

Durch eine entsprechende Anzahl und Anordnung von Schlitzen können nichtleitende Flächensegmente innerhalb der Heizschicht (wegen z.B. Sensoren, Funkmautgeräten, Radarwarnern) berücksichtigt werden, ohne dass es zu lokal überhöhten Stromdichten kommt. Auch Fensterscheiben mit ungünstigem geometrischen Querschnitt (z.B. Fensterscheibe einer Seitentür eines Kraftfahrzeugs) können auf diese Weise technisch einfach flächig beheizt werden.

Vorzugsweise erstreckt sich die Längsrichtung des mindestens einen Schlitzes in einem von 0° verschiedenen Winkel zur Flussrichtung eines Teilstromes des elektrischen Heizstromes. Insbesondere verläuft die Längsrichtung des Schlitzes etwa quer zu einer Flussrichtung. Der Schlitz bzw. die Schlitze bewirken je nach geometrischer Ausrichtung, dass der Flächenwiderstand der Heizschicht in dem die Schlitze enthaltenden Flächensegment in einem bestimmten Betrag erhöht und damit eine lokale hohe Stromdichte reduziert wird. Die Schlitze bilden gewissermaßen elektrische Barrieren und versperren dem Strom den Weg des geringsten Widerstands. Die Schlitze werden derart ausgerichtet, dass der Heizstrom in die gewünschten Flächensegmente abgelenkt wird bzw. über diese Flächensegmente abfließt. Dabei hat ein vergleichsweise kurzer und/oder in einem spitzen Winkel gegenüber der zu betrachtenden Stromflussrichtung angeordneter Schlitz eine relativ geringe Sperrwirkung. Ein verhältnismäßig langer und/oder in einem rechten Winkel gegenüber der zu betrachtenden Stromflussrichtung angeordneter Schlitz hingegen hat eine relativ große Sperrwirkung.

Vorzugsweise sind mehrere Schlitze in einer Gruppe angeordnet, z.B. nebeneinander angereiht entlang einer geraden oder gebogenen bzw. gekrümmten Linie. Sie können auch auf mehreren voneinander beabstandeten, z.B. parallel verlaufenden, Linien angeordnet sein.

Vorzugsweise werden die Schlitze mittels eines Laser-Gerätes hergestellt, indem er feine Schnitte innerhalb der Heizschicht bewirkt. Diese feinen Linien sind optisch kaum auffällig und daher für einen Benutzer nicht störend. Vorteilhaft sind die Schlitze 30-100 µm breit. Insbesondere haben die Schlitze eine Länge von 0.5-50 mm.

Der Heizstrom wird mittels zweier Elektroden erzeugt, welche vorteilhaft an zwei gegenüberliegenden Seiten der Fensterscheibe angeordnet sind. Insbesondere sind die Elektroden bei einer Fensterscheibe mit unterschiedlich langen Seitenkanten an den längeren Seitenkanten angeordnet. Als Elektroden sind deshalb vorzugsweise elektrisch leitende Metallbänder oder Sammelschienen geeignet.

Vorteilhaft ist die beheizbare Fensterscheibe im Fahrzeugbau, z.B. als Windschutzscheibe oder als Seitentürscheibe, geeignet.

Die Erfindung wird anhand der in den Figuren dargestellten Ausführungsbeispiele näher erläutert.

Dabei zeigen:
- Fig. 1: Eine Draufsicht auf eine elektrisch beheizbare Windschutzscheibe;
- Fig. 2: Eine Draufsicht auf eine elektrisch beheizbare Seitentürscheibe einer Kraftfahrzeugtür.

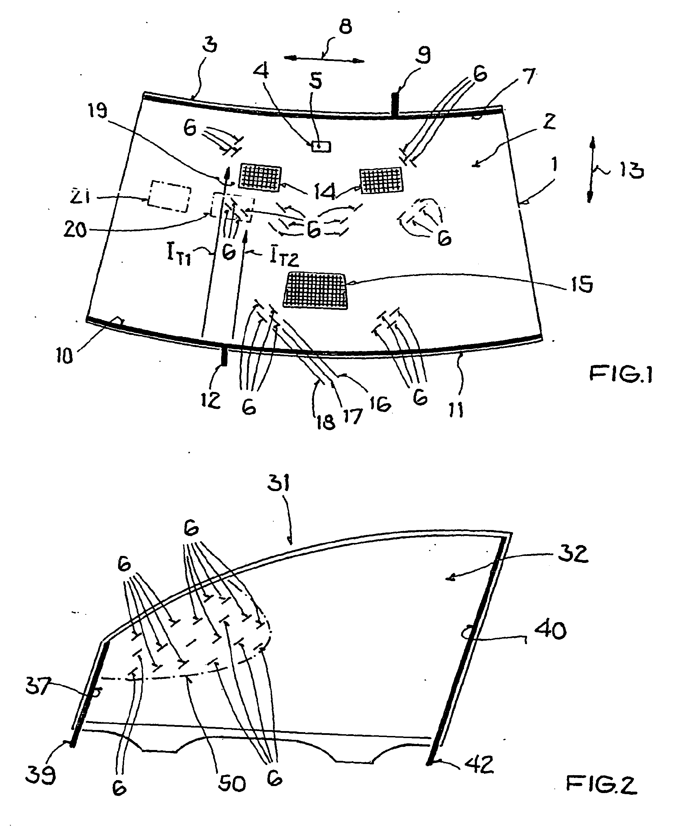

Die als Windschutzscheibe 1 eines Kraftfahrzeuges ausgebildete Fensterscheibe gemäß Fig.1 trägt eine transparente und elektrisch leitfähige Heizschicht 2. In einem mittleren, einer ersten Längskante 3 der Windschutzscheibe 1 zugewandten Bereich weist die Heizschicht 2 eine etwa rechteckige Aussparung 4 auf. In dieser Aussparung 4 ist mindestens ein Sensor 5, z.B. ein Regensensor, angeordnet. Außerdem sind innerhalb der Heizschicht 2 drei Fenster 14, 15 angeordnet, welche für elektromagnetische Wellen durchlässig sind (z.B. für Funkmaut-Geräte, Radarwarner etc.) und dort die elektrische Leitfähigkeit der Heizschicht 2 unterbrechen.

Um trotz der nichtleitenden Aussparung 4, der nichtleitenden Fenster 14, 15 und des trapezförmigen Zuschnittes der Windschutzscheibe 1 überhöhte lokale Stromdichten zu vermeiden, ist die Heizschicht 2 von mehreren Schlitzen 6 durchsetzt. Die Schlitze 6 sind auf mehreren gedachten Linien angeordnet. Beispielhaft sei dies anhand der Linien 16-18 erläutert. Ein Schlitz 6 ist auf der Linie 16 angeordnet, während sich ein weiterer Schlitz 6 auf der Linie 18 erstreckt. Auf der Linie 17 sind zwei Schlitze 6 voneinander beabstandet aneinandergereiht. Die Linien 16-18 verlaufen parallel zueinander. Die Schlitze 6 der Linie 16 einerseits und der Linie 17 andererseits sind versetzt zueinander angeordnet. Gleiches gilt für die Schlitze 6 der Linien 18 und 17.

Der elektrische Strom zur Beheizung wird mittels zweier Elektroden erzeugt, welche bandartig oder sammelschienenartig als Stromleiter ausgebildet sind und mit der Heizschicht 2 elektrisch kontaktiert sind. In Fig.1 ist eine erste Elektrode 7 im Bereich der ersten Längskante 3 parallel zu dieser angeordnet, wobei die Längskante 3 bogenförmig etwa in Längsrichtung 8 verläuft. Die Elektrode 7 ist mittels eines ersten Anschlusses 9 an eine Energiequelle angeschlossen. Die zweite Elektrode 10 ist im Bereich der zweiten Längskante 11 parallel zu dieser wiederum bogenförmig etwa in Längsrichtung 8 verlaufend angeordnet. Diese Elektrode 10 ist mittels eines zweiten Anschlusses 12 an die vorgenannte elektrische Energiequelle elektrisch angeschlossen. Der zwischen beiden Elektroden 7, 10 aufgebaute elektrische Heizstrom fließt etwa quer zur Längsrichtung 8, z.B. in Querrichtung 13, ab.

Die Funktion der Schlitze 6 zur lokalen Erhöhung des Flächenwiderstands wird anhand eines Beispiels erläutert, bei dem der Heizstrom von der Elektrode 10 zur Elektrode 7 abfließt. Ein Teilstrom dieses Heizstromes ist durch den Pfeil I_{T1} symbolisiert. In einem Bereich 19 links neben dem einen Fenster 14 würde ohne Schlitze 6 die Stromdichte erhöht sein, wenn nicht nur der Teilstrom I_{T1} dort abfließt, sondern aufgrund des Fensters 14 dort auch ein Teil eines weiteren Teilstromes I_{T2} abfließen muss. Deshalb sind in einem Flächensegment 20 (begrenzt durch eine in sich geschlossene strichpunktierte Linie) vier Schlitze 6 angeordnet, damit in diesem Flächensegment 20 der elektrische Flächenwiderstand höher ist als in einem vergleichbaren Flächensegment 21 mit gleicher Querschnittsfläche (begrenzt durch eine in sich geschlossene strichpunktierte Linie) ohne die Schlitze 6. Die vorgenannten Teilströme werden deshalb im Bereich des Flächensegments 20 teilweise abgelenkt zu anderen Bereichen der Heizschicht 2. Die Gefahr einer überhöhten Stromdichte im Bereich 19 wird somit vermieden.

Die Seitentürscheibe 31 gemäß Fig.2 ist mit einer an ihren Querschnitt angepassten, transparenten und elektrisch leitfähigen Heizschicht 32 beschichtet. Der Heizstrom fließt zwischen einer ersten Elektrode 37 und einer zweiten Elektrode 40. Die beiden Elektroden 37,40 sind über einen ersten Anschluss 39 und einen zweiten Anschluss 42 an eine elektrische Energiequelle angeschlossen. Aufgrund der unsymmetrischen Flächenverteilung der Heizschicht 32 zwischen beiden Elektroden entsteht etwa in einem durch eine strichpunktierte Linie begrenzten Flächensegment 50 eine besonders große Stromdichte. Dort wird deshalb der Flächenwiderstand mittels der Schlitze 6 lokal erhöht, damit der Heizstrom teilweise in andere Flächensegmente abgelenkt wird. Somit werden zu große Unterschiede zwischen lokalen Stromdichten innerhalb der Heizschicht 32 vermieden.

## Patentansprüche

1. Beheizbare Fensterscheibe (1, 31)
- mit einer leitfähigen und transparenten Heizschicht (2, 32) als Heizwiderstand für elektrischen Strom und
- mit zwei Elektroden (7, 10) zur Erzeugung des elektrischen Stromes,
wobei innerhalb der Heizschicht (2) mindestens ein Schlitz (6) zur lokalen Veränderung der Stromdichte vorgesehen ist,
der mindestens eine Schlitz (6) mit Abstand zu den Elektroden (7, 10), und mit Abstand zu den Scheibenrändern der Fensterscheibe (1, 31) angeordnet ist **dadurch gekennzeichnet dass** der mindestens eine Schlitz (6) auch mit Abstand zu einem einer Antenne oder einem Sensor zugeordneten, elektrisch nichtleitenden Flächensegment (4, 14, 15) innerhalb der Heizschicht (2) angeordnet ist.

2. Fensterscheibe nach Anspruch 1,
**dadurch gekennzeichnet,**
**dass** der mindestens eine Schlitz (6) derart in einem Winkel zu einer Flussrichtung (I_{T2}) des elektrischen Stromes angeordnet ist, dass der elektrische Flächenwiderstand in einem den mindestens einen Schlitz (6) enthaltenden Flächensegment (20) größer ist als in einem anderen Flächensegment (21) ohne den mindestens einen Schlitz (6).

3. Fensterscheibe nach einem der vorhergehenden Ansprüche,
**dadurch gekennzeichnet,**
**dass** der mindestens eine Schlitz (6) auf mindestens einer gedachten Linie (16 - 18) angeordnet ist.

4. Fensterscheibe nach Anspruch 3,
**dadurch gekennzeichnet,**
**dass** mehrere Schlitze (6) voneinander beabstandet entlang einer Linie (17) aneinandergereiht sind.

5. Fensterscheibe nach Anspruch 3 oder 4,
**dadurch gekennzeichnet,**
**dass** Schlitze (6) auf mehreren Linien (16-18), insbesondere auf parallelen Linien (16-18), angeordnet sind.

6. Fensterscheibe nach einem der Ansprüche 3 - 5,
**dadurch gekennzeichnet,**
**dass** Schlitze (6) unterschiedlicher Linien (16,17; 17,18) gegeneinander versetzt angeordnet sind.

7. Fensterscheibe nach einem der vorhergehenden Ansprüche,
**dadurch gekennzeichnet,**
**dass** der mindestens eine Schlitz (6) mittels eines Laser-Schnittes hergestellt ist.

8. Fensterscheibe nach Anspruch 1,
**dadurch gekennzeichnet,**
**dass** die beiden Elektroden (7,10; 37,40) an zwei einander gegenüberliegenden Seiten (3, 11) der Fensterscheibe (1, 31) angeordnet sind.

9. Fensterscheibe nach Anspruch 1 oder 8,
**dadurch gekennzeichnet,**
**dass** mindestens eine Elektrode (7,10; 37,40) nach Art einer Sammelschiene ausgebildet ist.

10. Fensterscheibe nach einem der vorhergehenden Ansprüche,
**dadurch gekennzeichnet,**
**dass** sie als Scheibe, insbesondere als Windschutzscheibe (1), eines Kraftfahrzeugs verwendet wird.

## Claims

1. Heatable window pane (1, 31)
- with a conductive and transparent heating layer (2, 32) as a heating resistor for electric current and
- with two electrodes (7, 10) for generating the electric current,
at least one slit (6) for locally changing the current density being provided within the heating layer (2), the at least one slit being arranged at a distance from the electrodes (7, 10) and at a distance from the edges of the window pane (1, 31), **characterized in that** the at least one slit (6) is also arranged at a distance from an electrically nonconducting area segment (4, 14, 15) within the heating layer (2) that is assigned to an aerial or a sensor.

2. Window pane according to Claim 1, **characterized in that** the at least one slit (6) is arranged at an angle to a direction of flow (I_{T2}) of the electric current in such a way that the electrical surface resistance in an area segment (20) containing the at least one slit (6) is greater than in another area segment (21) without the at least one slit (6).

3. Window pane according to one of the preceding claims, **characterized in that** the at least one slit (6) is arranged on at least one imaginary line (16 - 18).

4. Window pane according to Claim 3, **characterized in that** a number of slits (6) are arranged in series spaced apart from one another along the line (17).

5. Window pane according to Claim 3 or 4, **characterized in that** slits (6) are arranged on a number of lines (16-18), in particular on parallel lines (16-18).

6. Window pane according to one of Claims 3 - 5, **characterized in that** the slits (6) of different lines (16, 17; 17, 18) are arranged offset with respect to one another.

7. Window pane according to one of the preceding claims, **characterized in that** the at least one slit (6) is produced by means of a laser cut.

8. Window pane according to Claim 1, **characterized in that** the two electrodes (7, 10; 37, 40) are arranged on two mutually opposite sides (3, 11) of the window pane (1, 31).

9. Window pane according to Claim 1 or 8, **characterized in that** at least one electrode (7, 10; 37, 40) is formed in the manner of a bus bar.

10. Window pane according to one of the preceding claims, **characterized in that** it is used as a window, in particular as a windscreen (1), of a motor vehicle.

## Revendications

1. Vitre chauffante (1, 31)
- comprenant une couche chauffante (2, 32) conductrice et transparente comme résistance chauffante pour un courant électrique et
- comprenant deux électrodes (7, 10) pour générer le courant électrique,
au moins une fente (6) destinée à la modification locale de la densité du courant étant prévue à l'intérieur de la couche chauffante (2),
l'au moins une fente (6) étant disposée à un certain écart des électrodes (7, 10) et à un certain écart des bords de la vitre (1, 31), **caractérisée en ce que** l'au moins une fente (6) est également disposée à un certain écart d'un segment de surface (4, 14, 15) non conducteur d'électricité affecté à une antenne ou à un capteur à l'intérieur de la couche chauffante (2).

2. Vitre selon la revendication 1, **caractérisée en ce que** l'au moins une fente (6) est disposée selon un angle par rapport à un sens de circulation (I_{T2}) du courant électrique de telle sorte que la résistance électrique superficielle dans un segment de surface (20) contenant l'au moins une fente (6) est supérieure à celle dans un autre segment de surface (21) sans l'au moins une fente (6).

3. Vitre selon l'une des revendications précédentes, **caractérisée en ce que** l'au moins une fente (6) est disposée sur au moins une ligne droite (16 - 18).

4. Vitre selon la revendication 3, **caractérisée en ce que** plusieurs fentes (6) sont alignées à une certaine distance les unes des autres le long d'une ligne (17).

5. Vitre selon la revendication 3 ou 4, **caractérisée en ce que** les fentes (6) sont disposées sur plusieurs lignes (16 - 18), notamment sur des lignes parallèles (16 - 18).

6. Vitre selon l'une des revendications 3 à 5, **caractérisée en ce que** les fentes (6) de différentes lignes (16, 17 ; 17, 18) sont disposées décalées les unes par rapport aux autres.

7. Vitre selon l'une des revendications précédentes, **caractérisée en ce que** l'au moins une fente (6) est réalisée au moyen d'une coupe au laser.

8. Vitre selon la revendication 1, **caractérisée en ce que** les deux électrodes (7, 10 ; 37, 40) sont disposées sur deux côtés (3, 11) opposés l'un à l'autre de la vitre (1, 31).

9. Vitre selon la revendication 1 ou 8, **caractérisée en ce qu'**au moins une électrode (7, 10 ; 37, 40) est réalisée à la manière d'une barre collectrice.

10. Vitre selon l'une des revendications précédentes, **caractérisée en ce qu'**elle est utilisée en tant que vitre, notamment en tant que pare-brise (1), d'un véhicule automobile.
